(19) Europäisches Patentamt / European Patent Office / Office européen des brevets

(11) **EP 2 162 366 B1**

(12) **EUROPEAN PATENT SPECIFICATION**

(45) Date of publication and mention
of the grant of the patent:
**03.04.2013 Bulletin 2013/14**

(21) Application number: **08759364.6**

(22) Date of filing: **01.07.2008**

(51) Int Cl.:
***B65D 81/24*** *(2006.01)*      ***A23B 7/148*** *(2006.01)*

(86) International application number:
**PCT/EP2008/005358**

(87) International publication number:
**WO 2009/003675 (08.01.2009 Gazette 2009/02)**

(54) **CONTAINER FOR RESPIRING PRODUCE**

BEHÄLTER FÜR ATMENDE PRODUKTE

RÉCIPIENT PERMETTANT AUX DENRÉES DE RESPIRER

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **02.07.2007 EP 07012897**

(43) Date of publication of application:
**17.03.2010 Bulletin 2010/11**

(73) Proprietor: **DSM IP Assets B.V.**
**6411 TE Heerlen (NL)**

(72) Inventors:
• **KRIJGSMAN, Josien**
  **NL-6224 HP Maastricht (NL)**
• **STROEKS, Alexander, Antonius, Marie**
  **NL-6301 HL Valkenburg Aan De Geul (NL)**
• **THODEN VAN VELZEN, Eggo, Ulphard**
  **NL-6662 TP Elst (NL)**

(74) Representative: **Biermann, Jan et al**
**DSM Intellectual Property**
**P.O. Box 130**
**6100 AC Echt (NL)**

(56) References cited:
EP-A- 0 737 709      EP-A- 1 245 617
WO-A-93/04949      WO-A-99/48969
US-A- 5 698 249      US-A- 5 840 807

## Description

The invention relates to a container made from a packaging material for respiring produce that benefits from an environment that has a low concentration both in $O_2$ and $CO_2$ and removal of free water. The invention further relates to a container fully or partly made out of the packaging material.

Packaging respiring produce poses specific requirements to the atmosphere immediately surrounding the produce. The reason for this is that the produce, because of its biological nature, will deteriorate more or less quickly. The rate of deterioration will generally depend on the conditions of the atmosphere immediately surrounding the produce. When deterioration has gone too far, the produce can't be used and consumed anymore and must be thrown away. This throwing away causes considerable economic losses to the producer, retailer, consumer and society in general and produces a lot of waste. Additionally deteriorated produce can pose a health risk for example to the unaware consumer. Therefore extending the time that the produce can be used and consumed safely is an important issue. The time wherein the desired qualities of the produce such as flavour, texture and taste are maintained is generally referred to as the "shelf life".

In the past, shelf life extension was mainly reached by refrigeration only. Refrigeration causes the maturation process of the produce to slow down and thus the point in time where the shelf life of the produce is exceeded is delayed. However the quality of some types of produce is greatly reduced when the produce is kept in the refrigerator and therefore refrigeration is not always a suitable option to extend shelf life.

Extension of shelf life can also and sometimes better be reached by controlling the atmosphere immediately surrounding the produce. Maturation of produce is namely in essence the process of the consumption of oxygen and the production of carbon dioxide by the produce. This process can be influenced by modifying the atmosphere surrounding the produce. For each type of produce there is a "best set of conditions" for the atmosphere to reach maximum shelf life. The atmosphere can be modified in several ways. One method is for example to add or remove gases from the atmosphere immediately surrounding the produce at the moment just before closing the package and thus creating a "modified atmosphere package", so-called MAP. Another method is the method of "active packaging" aiming at the release or absorption of gases by the package itself and thus influencing the inner atmosphere. Again another method is to use materials that exhibit a specific permeability and combination of specific permeabilities towards relevant gases, such as oxygen and/or carbon dioxide and/ or water. The use of these materials (see for example EP-A-1 245 617 ; EP-A-0 737 709 or WO-A-93/04949) in the construction of the container promotes a favourable atmosphere for the produce.

The use of selected materials for the preparation of a container for produce is for example described in US 5.045.331. The container in US'331 is made out of a substantially impermeable material having on one or more of the surfaces thereof a panel of non-woven material coated with a water resistant resin, which panel provides a gas flux comprising the majority of the gas flux through the container. It is mentioned that the materials used to coat the non-woven material, the area of the panel and the relationship of the surface of the panel to the total container surface are chosen in conjunction with the produce respiration rate, such that the combination of the total flux through the panel and the produce respiration rate provides dynamic control of the atmosphere inside the container.

A disadvantage of the container described in US'331 is that the selectivity of $CO_2$ and $O_2$ permeability is between 1:1 and 8:1. This is not high enough to obtain very low $CO_2$ packaging atmosphere. Therefore this type of container is not suitable for highly respiring products that are harmed by increased $CO_2$ levels in the package. It is even stressed in US'331 that the material of construction is not critical as long as the entire container is impermeable to moisture and substantially impermeable to air except for the control panel.

EP 0.270.764 describes a container for the storage of fresh fruits and vegetables wherein part of the container is made out of a material containing pores to regulate the gas atmosphere. A disadvantage of such a container is that bacteria and germs can easily enter the container through those pores, which is undesirable in view of the object to extend shelf life of respiring produce. Additionally the carefully dimensioned pores can become blocked, for example by the produce itself, thereby disturbing the purposively regulated atmosphere. Furthermore the selectivity for oxygen and carbon dioxide is low and such a type of packaging has no water permeability.

The aim of the present invention is to overcome the above mentioned disadvantages and to provide an improved container for respiring produce made out of a packaging material.

This aim is reached by the use of a packaging material in the construction of a container suitable for respiring produce, wherein the packaging material consists of a polyether-ester block copolymer or a blend of polyether-ester block copolymers and which packaging material has all of the following properties:

a) permeability for oxygen is at least 40 cc.mm/$m^2$.day.atm at 10°C
b) permeability for carbon dioxide is at least 600 cc.mm/$m^2$.day.atm at 10 °C
c) perm selectivity of carbon dioxide to oxygen is at least 10
d) water vapour transmission is at least 0.5 g.mm/ $m^2$.day at 10 °C and 85% RH and
e) wherein the dimensions of the packaging material are chosen so as to allow oxygen to enter into the container at a rate lower than 110% of the oxygen respiration rate of the produce.

It has surprisingly been found that by using a packaging material with a perm selectivity of at least 10 in combination with improved water vapour transmission and in combination with the other features, the shelf life of the produce can be improved.

Produce is generally considered to be agricultural products and especially fresh fruits and vegetables. For the purpose of the invention flowers are considered to be included. The produce can be cut or uncut, therefore including for example both fresh whole fruits and cut fruits. Certain types of produce benefit especially from this new type of packaging material, such as for example pepper, leek, green bean and the like: sugar snaps and haricots verts, lettuce, onions, spinach and herbs like parsley, basil and chive, apple, orange, banana, mandarin, pear, mango, kiwi fruit, peach, nectarine, mixed cut vegetables ("ready-to-cook"), including ingredients like pepper, leek, onion, potato, mushroom, zucchini, cut lettuce (for example iceberg, roman, endive, spinach) or cut curly kale, cut fruit and fruit mixes or fruit salads, cut salad mixes including ingredients like cut pepper, cucumber and onion and mixes of fruit and vegetables. Also mixes of any of the above are included.

The packaging material used in the present invention consists of a polyether-ester block copolymer or a blend of polyether-ester block copolymers. The use of this type of material was found to result in considerable extension of shelf life of the produce.

US 5.840.807 describes the use of polyether- amides blended with a polyolefin for the construction of sachets. A disadvantage of this type of materials compared to polyether- ester block copolymer, is the generally higher cost price of these materials and the higher temperature necessary for processing which is disadvantageous in the specific area of application. Additionally polyether- amides are generally more hygroscopic than polyether-esters, which is unfavourable when packaging respiring produce. A further disadvantage is that blending will generally influence the transparency in a negative way.

Polyether-ester block copolymers are well known in the state of the art as is their preparation. Therefore the man skilled in the art can without undue burden prepare these types of resins. Reference can for example be made to WO 03/031858 and WO 2006/131236. The packaging material for use in the invention is a polyether- ester block copolymer or a blend of polyether-ester block copolymers. With "blend of polyether- ester block copolymers" is here and hereinafter meant a blend of at least two polymers that are both polyether- ester block copolymers. The blend does not include polymers that have no polyether and polyester blocks. Thus the blend only contains polymers that have at least a polyether block and a polyester block.

It is within the scope of the invention that the polyether-ester block copolymer contains next to the one or more polyether blocks and one or more polyester blocks also other blocks in the block copolymer. However it is preferred for the polyether- ester block copolymer to contain only polyether and polyester blocks as this type of material results in the best balance of properties. Within one polyether-ester block copolymer blocks of different polyethers and/ or different polyester blocks can be present. It is for example possible to have within the polyether- ester block copolymer one type of polyether block and more than one type of polyester block or one type of polyester block and more than one type of polyether block or more than one polyether block and more than one polyester block.

The polyether-ester block copolymer for use in the invention is a polyether-ester wherein the polyether can for example be polyethylene oxide (PEO), polypropylene oxide (PPO) or poly(tetramethylene oxide) (PTMO), or combinations or copolymers thereof. The polyesters in the polyether- ester can for example be polyethylene terephtalate (PET), polybutylene terephtalate (PBT), polyethylene naphtanoate (PEN) or polybutylene naphtanoate (PBN) or combinations or copolymers of any of them. Preferably PET or PBT is used. More preferably PBT is used. Part of the polyether in the polyether-ester copolymer can be replaced by polysiloxane segment or dimer fatty acid segment. The polyether-ester block copolymers can be branched. The amount of polyether compared to the amount polyester in the polyether-ester can be varied freely, as long as the requirements regarding gas permeability and water permeability as described above are met. The amount polyether can for example be between 20 and 75 wt% of the polyether- ester. Preferably the amount polyether is between 25 and 65 wt%, more preferably between 30 and 60 wt%. In case part of the polyether is replaced by polysiloxane or dimer fatty acid, the amount given here for polyether includes the amount for polysiloxane and/ or dimer fatty acid. The sum of the amount of polyether and polyester blocks adds up to 100%.

A preferred polyether-ester has PBT as polyester and PTMO or a PEO/PPO copolymer as polyether. A preferred polyether- ester of this type has between 40 and 75 wt% PBT as polyester and between 60 and 25 wt% PTMO or PEO/PPO copolymer as polyether. A more preferred polyether-ester has PBT as polyester and PEO/PPO copolymer as polyether. A most preferred polyether-ester has PBT as polyester and a PPO-endcapped PEO copolymer as polyether.

The packaging material for use in the invention has a permeability for oxygen of at least 40 cc.mm/m$^2$.day.atm at 10 °C, preferably at least 50 cc.mm/m$^2$.day.atm at 10 °C, more preferably at least 100 cc.mm/m$^2$.day.atm at 10 °C, most preferably at least 200 cc.mm/m$^2$.day.atm at 10 °C. These numbers particularly apply when the container is fully made out of the packaging material. In case the container is partly made out of the packaging material, the permeability for oxygen of the packaging material is preferably at least 500 cc.mm/m$^2$.day.atm at 10 °C, more preferably at least 750

3

cc.mm/m$^2$.day.atm at 10 °C.

The packaging material for use in the invention has a permeability for carbon dioxide of at least 600 cc.mm/m$^2$.day.atm at 10 °C, preferably at least 750 cc.mm/m$^2$.day.atm at 10 °C, more preferably at least 900 cc.mm/m$^2$.day.atm at 10 °C. These numbers particularly apply when the container is fully made out of the packaging material. In case the container is partly made out of the packaging material, the permeability for carbon dioxide of the packaging material is preferably at least 6000 cc.mm/m$^2$.day.atm at 10 °C, more preferably at least 7500 cc.mm/m$^2$.day.atm at 10 °C.

The perm selectivity for gas A to gas B determines the levels of oxygen and carbon dioxide at steady state conditions in the container and is defined as the ratio of the permeability for gas A to the permeability for gas B. The perm selectivity for $CO_2$ and $O_2$ is thus defined as the ratio of the permeability for $CO_2$ to the permeability of $O_2$ and can be calculated from the values for the permeability as obtained above. The packaging material for use in the invention has a perm selectivity of at least 10 (at 10 °C), preferably at least 12, more preferably at least 15, most preferably at least 20. With a higher perm selectivity a better suitable atmosphere for respiring produce can be reached. Such a suitable atmosphere will generally have a low $O_2$ and low $CO_2$ atmosphere.

The permeability of the packaging material can be determined by the following method. The single gas permeabilities of oxygen or carbon dioxide were determined using the variable pressure method. Films of the packaging material, cut to a circular surface area of 11.95 cm$^2$, were measured using a pressure difference of 10 bar (dry conditions). The temperature was varied between -5 and 35 °C, starting at the lowest temperature. The gas permeabilities were calculated from the steady-state pressure increase as a function of time in a calibrated and evacuated volume at the permeate side. The $CO_2/O_2$ perm selectivity of the films of the packaging material was determined from the ratio of the permeabilities of both single components.

The fresh produce that is packed in the container will during its maturation and respiring process generate water. The presence of water in the container can negatively influence the quality and shelf life of the produce. Additionally consumers buying the packed produce valuate the presence of water in the package negatively. For all these reasons it is generally attempted to keep the liquid water level as low as possible in the package.

In US 5.165.947 a method is described to obtain a low level of water. This method comprises the inclusion of a separate sachet with a humectant material so as to absorb water generated in the respiration process. A disadvantage of this method in US'947 is that the consumer of the produce can get confused and thinks it can be eaten together with the produce. This can cause health risks depending on the nature of the humectant. Another disadvantage is that the sachet can become damaged thereby releasing the humectant to the contents of the package and thus becoming mixed with the fresh produce. This is especially disadvantageous when the fresh produce is for example cut vegetables. In such a case the whole contents should be thrown away. Additionally the inclusion of a separate sachet increases the costs of the system by the additional costs of the sachet and it makes an additional step necessary in the packaging process which is undesirable from the point of view of process economics. It is clear that the presence of a separate sachet is undesirable. Therefore a need exists for packaging materials that make the use of separate sachets superfluous.

This object is reached by use in the present invention of the packaging material with the combination of the above described properties.

The packaging material for use in the invention has a water vapour transmission of at least 0.5 g.mm/m$^2$.day at 10 °C and 85% RH, preferably at least 1 g.mm/m$^2$.day at 10 °C and 85% RH. The higher the water vapour transmission, the better the liquid water that is generated in the maturation of the produce, can be transported out of the container made from the packaging material. The rate of vapour transmission is more relevant for some of the produce than for others as some generate more water during respiration than others and because some of them are more sensitive, in the sense that rotting or accelerated maturation occurs, to water than others. Examples of produce that especially benefit from a high water vapour transmission rate are lettuce, especially cut lettuce and mushrooms.

An additional advantage of keeping the level of water low in the container is that rotting and/ or increased maturation is slowed down and the bacteriological activity can be kept low. Additionally it was surprisingly found that the packaging material for use in the present invention has an anti-fog functionality.

The water vapour transmission is determined according to ASTM E96B (wet cup). Moisture vapour transmission rate (MVTR) measurements were performed using a climate chamber from CTS. The cups contained 50 ml demineralised water. The temperature was 10°C and the relative humidity outside the cup was 85%. The climate chamber is equipped with a ventilation system.

Depending on the kind of produce and the amount that has to be packed, the man skilled in the art can choose a material to make the container from and determine the size of the container. This is well-known to the man skilled in this field, see for example EP 0.270.764. It is known from literature what a preferred atmosphere is for the various type of produce. Some benefit for example from an atmosphere relatively rich in carbon dioxide and low in oxygen. Knowing the preferred atmosphere for the type of produce, makes it possible to determine the type of packaging material as the composition of the atmosphere surrounding the produce is largely determined by the perm selectivity. When knowing the amount of produce that has to be packed into the container than it is possible to determine the size of the container or at least the size of the packaging material that takes care of regulating the inner atmosphere.

It has been found during thorough research that produce benefits from a situation where the influx of oxygen is maximally 110% of the respiration rate of the produce. Preferably the influx of $O_2$ is less than or equal to 90%, more preferably less than or equal to 75%, more preferably less than or equal to 60%, even more preferably less than or equal to 40%, most preferably less than or equal to 20% of the respiration rate of the produce. With respiration rate is here and hereinafter referred to the oxygen respiration rate. The respiration rate for the purpose of the calculation of the dimensions of the packaging material, is determined of fresh, unpacked produce in air. However, in general the respiration rate will not be a fixed value during the life time of the produce. For example at a lower oxygen concentration or for older produce, the respiration rate will decrease compared to the fresh produce such as the one that is used in the determination of the dimensions of the packaging material.

From all this above, it can be calculated what the size of the container should preferably be by using the following equations:

$$C = B * w \qquad (I)$$

wherein:

C = consumption of $O_2$ per day per container, [ml/ day]
B = consumption of $O_2$ per kg produce per day, [ml/ kg.day]
w = amount of produce in the container, [kg]

and

$$F = (P/t) * A * p \quad (II)$$

wherein:

F = flux $O_2$ into the container per day, [ml/ day]
P = permeability to $O_2$, [ml.mm/ ($m^2$.day.atm)
t = thickness of layer of packaging material, [mm]
A = surface area of the packaging material, [$m^2$]
p = driving force = partial $O_2$ pressure difference, [atm]

The driving force, p, is thus the difference between the partial oxygen pressure in the outside air and the partial oxygen pressure in the container.

Thus now having found the optimal conditions for produce, the dimensions of the container can be calculated with the aid of equations I and II:

$$F = y * C \quad (III)$$

wherein F and C are defined as above and y is the factor by which the influx of $O_2$ equals the respiration rate. So for example, for the desired condition that the influx of oxygen is 110% of the respiration rate, factor y is 1,1. For the condition that the influx of oxygen is 70% of the respiration rate, factor y is 0,7 and so forth.

Therefore when choosing a material and knowing the permeability (as that is a property of the material itself) the only variables are the thickness of the packaging material and its surface area. These two can be varied. For example when using a relatively thick film, the surface area should be relatively large and the other way around. Or when using a film of a predetermined thickness, variations can be made between the material (and thus the permeability) and the surface area: when using a material with a high permeability a small surface area is only necessary and the other way around. In this way the man skilled in the art can easily determine which combination suits his application best.

Variation of the water permeability can be achieved in the same way as variation in the gas permeability by changing the film area, thickness and absolute permeability.

A preferred packaging material for use in the construction of a container consists of a polyether- ester block copolymer or a blend of polyether- ester block copolymers and has all of the following properties:

a) permeability for oxygen is at least 100 cc.mm/m$^2$.day.atm at 10 °C

b) permeability for carbon dioxide is at least 750 cc.mm/m$^2$.day.atm at 10 °C

c) perm selectivity of carbon dioxide to oxygen is at least 12

d) water vapour transmission is at least 1 g.mm/m$^2$.day at 10 °C and 85% RH and

e) wherein the dimensions of the packaging material are chosen so as to allow oxygen to enter into the container at a rate lower than or equal to 90% of the oxygen respiration rate of the produce.

It has surprisingly been found that cut lettuce and especially cut iceberg lettuce, cut romain lettuce, cut spinach and cut endive benefit from a container made out of packaging material that allows the rate at which oxygen enters the container to be below 250 ml/kg.day, preferably below 200 ml/kg.day, more preferably below 120 ml/kg.day. For lettuce it is preferred to have a container wherein the oxygen concentration at steady state conditions is less than 2 vol% $O_2$, preferably less than 1 vol%, more preferably less than 0,5 vol% $O_2$, most preferably less than 0,2 vol% $O_2$.

For lettuce, not only the level of oxygen in the container is relevant also the carbon dioxide level should be taken into account to reach the most favourable conditions. Preferably the $CO_2$ level should not exceed 15% at the end of the shelf life, more preferably less than 10% and most preferably less than 5%.

The packaging material is used for the construction of a container for respiring produce. The invention relates to a container for respiring produce made out of the packaging material. Here and hereinafter with "container" is meant a shaped article that is able to contain a gaseous and/or liquid and/or solid product. It is not limited to any particular shape. Non-limiting examples of shapes of containers according to the invention are square, rectangular, triangular and spherical shapes. Both flexible and rigid containers can be used in the present invention. Non-limiting examples of containers according to the invention are boxes, bottles, cans, casks, kegs, bags and blisters.

The man skilled in the art of making containers knows which production method is most suitable for making which type of container. Examples of various production methods are moulding such as for example blow moulding, extrusion blow moulding, injection blow moulding, multilayer blow moulding, calendaring, casting, film casting, extrusion (profile, sheet, pipe, tubing, fibres, film), blown film extrusion, foam extrusion, injection moulding, reaction injection moulding, compression moulding, laminating, rotational moulding and thermoforming.

It is advantageous when the packaging material according to the invention has good heat sealability as the packaging material will generally need to adhere either to itself or to another material that is a part of the container.

Because of the nature of the produce that is kept in the container it is desirable that one can inspect the quality of the produce. Therefore it is advantageous when the packaging material that is used to make the container from, is transparent. An additional advantage arises when the packaging material used in the construction of the container has an anti-fog functionality as in this case the produce in the container can better be inspected than when the packaging material doesn't have that functionality. The anti-fog functionality prevents the inner surface of the container from becoming covered with water droplets. The man skilled in the art of packaging materials knows how to reach anti-fog functionality. It can for example be reached by using an apolar surface and/ or by adjusting the permeability.

In one embodiment of the invention, the packaging material is used to make the complete container. Thus the container is fully made out of the packaging material as described above with all of the following properties:

a) permeability for oxygen is at least 40 cc.mm/m$^2$.day.atm at 10 °C

b) permeability for carbon dioxide is at least 600 cc.mm/m$^2$.day.atm at 10 °C

c) perm selectivity of carbon dioxide to oxygen is at least 10

d) water vapour transmission is at least 0.5 g.mm/ m$^2$.day at 10 °C and 85% RH.

The dimensions of the container fully made out of the packaging material are chosen so as to allow oxygen to enter into the container at a rate lower than 110% of the respiration rate of the produce.

The preferences described above in connection with the use of the packaging material are also applicable to the container made from the packaging material.

An example of a container fully made out of the packaging material is a bag made out of the material which bag is sealed at the opening. The bag can be made out of a film made out of the packaging material.

In another embodiment of the invention, the packaging material is used to make only a part of the, but not the complete, container: Thus the container is only partly made out of the packaging material described above with the defined parameters on $O_2$- and $CO_2$- permeability, perm selectivity and water vapour transmission. Thus the container is only partly made out of the packaging material as described above with all of the following properties:

a) permeability for oxygen is at least 40 cc.mm/m$^2$.day.atm at 10 °C

b) permeability for carbon dioxide is at least 600 cc.mm/m$^2$.day.atm at 10 °C

c) perm selectivity of carbon dioxide to oxygen is at least 10

d) water vapour transmission is at least 0.5 g.mm/m$^2$.day at 10 °C and 85% RH.

The dimensions of the part of the container that is made out of the packaging material are chosen so as to allow oxygen to enter into the container at a rate lower than 110% of the respiration rate of the produce.

In this embodiment of the invention the following wording is used to indicate the materials the container is made of: the material that regulates the atmosphere inside the container is referred to as the "packaging material" or the "packaging material according to the invention" or the "packaging material for use in the invention", the other materials used in the construction of the container are referred to as "materials" or "other materials".

Such a container can be considered a container with 2- or more pieces. The invention also relates to such a multi- (two- or more) piece container wherein at least one piece is made out of the packaging material described above and the other part or parts are made out of an impermeable material. An example of such a multi-part container that is partly made out of the packaging material according to the invention is a flexible or rigid tray covered with a lid, whereby the lid is made out of the packaging material. Another example of a container that is partly made out of the packaging material according to the invention is a container made out of a certain material with a panel made out of the packaging material according to the invention, whereby the panel covers an excision or window or hole in the material the container is made from. The shape of the panel that is made out of the packaging material is not particularly relevant as long as the requirements regarding material properties and dimensions as described above are met. Examples of the shape of the panel is a strip, rectangular, square, circular, ellipsoidal, triangular or any other fancy shape when desirable. It is even possible to make for example company logos out of the packaging material and attach it over the excision in the container material.

Preferably the container is made only partly out of the packaging material according to the invention whereby the packaging material is present in the form of a panel over a hole in a material that is substantially impermeable, preferably impermeable, to gas and/ or water vapour. In such a design the panel made out of the packaging material according to the invention is substantially the only area where the gasses and vapours can enter and/ or exit the container. Preferably the panel made out of the packaging material according to the invention is the only area where the gasses and vapours can enter and/ or exit the container.

The panel made out of the packaging material can be connected to the rest of the material of the container by well-known techniques, such as for example heat-sealing or by the use of a separate adhesive. Depending on the combination of the packaging material with the material of the container that need to be connected the man skilled in the art knows what technique and/or type of adhesive can best be used.

The best properties of the container in view of the shelf life are reached when the packaging material as described above is used in the form of a monolithic packaging material.

In another preferred embodiment the container according to the present invention is made from at least 2 layers of material of which at least one of the layers is made out of the packaging material. If another type of material is used in combination with the packaging material, that other material must have permeabilities at least equal to or higher than the packaging material. It is for example possible to attach the layer of packaging material to a substrate that doesn't hinder the efficiency and activity of the packaging material. An example of such a material could be a paper or non-woven layer. The material layer could function as a carrier for the packaging material.

In again another embodiment, the packaging material used in the construction of the container, either a single or multi- part, is used as a single layer film.

Examples of suitable other container materials next to the packaging material are well-known to the man skilled in the art of packaging. Examples of suitable container materials are polyolefin, polyester, polyamide, EVOH and/ or PVDC.

The present invention will be elucidated by the following examples without being limited to them.

Examples

Several packaging materials were tested on their suitability for use in the construction of a container for respiring produce. The containers made out of the packaging material were bags of rectangular shape with different dimensions for the length and the width.

Fresh respiring produce that are sold commercially are usually packed in bags of polypropylene (PP), oriented PP (OPP) or polyvinylidene chloride (PVdC) which are commonly coated with thin films to create anti-fog and improved sealing properties. These bags are known in the industry as flow-packs and are usually produced on vertical flow packing machines. Currently it is common practice in the fresh cut produce industry to pack respiring produce under modified atmosphere (mostly: reduced oxygen pressure). This is generally conducted by nitrogen flushing. This implies that a plastic hose or metal tube blows nitrogen gas into the bag that is being formed while the vertical flow packing machine forms the bag. The settings are such that the initial oxygen concentration inside the bag is below a certain threshold value. This threshold value is inversely related to the oxygen permeability of the used bag material. For instance, producers that are using less permeable PVdC-coated PP bags will use higher initial oxygen concentrations of less than 0.1 bar (<10% $O_2$), whereas producers that are using more permeable polyacrylate-coated PP bags will use lower initial oxygen concentrations of less than 0.03 bar (<3% $O_2$).

<u>Reference material</u>

The reference material is BOPP/antifog 30 $\mu$m (supplied by MMF Transparant B.V., Haarlem, the Netherlands, material code WAF 305251250). The oxygen and carbon dioxide permeability of the BOPP/antifog material were 272 and 1278 cc/m$^2$.atm.day at 10°C respectively. The water permeability is too low to measure with the ASTM E96B test at 10°C and 85% RH (<0.1 g/m2.day).

<u>Packaging materials used for the invention</u>

Lettuce was packed in the material of the invention according to:

**Container fully made out of packaging material:**

For a rectangular bag, Polyetherester A, B or C was used. The bag was prepared by heat sealing on 4 sides.

**Container only partly made out of the packaging material:**

PET bags were made with a patch of Polyetherester B over a window cut out of the bag.

**Polyetherester A**

Polyetherester A contains 35 wt% polyether: polytetramethyleneoxide and 65wt% polyester: polybutylene terephthalate, PBT. Oxygen permeability of a 30 $\mu$m- film of polyetherester A is 1600 cc/m$^2$.day.atm at 10°C, and $CO_2$-permeability of this 30 $\mu$m- film is 23.500 cc/m$^2$.day.bar at 10°C. The water vapour permeability (30 um, ASTM E96B, 10°C, 85%RH) is 22 g/m$^2$.day. This polyetherester is commercially sold by DSM Engineering Plastics, the Netherlands, as Arnitel® EM550.

**Polyetherester B**

Polyetherester B contains 55 wt% polyether: polyethyleneoxide endcapped polypropyleneoxide and 45 wt% polyester: PBT. Oxygen permeability of a 30 $\mu$m- film of polyetherester B is 12.000 cc/m$^2$.day.atm at 10°C and $CO_2$-permeability is 234.000 cc/m$^2$.day.atm at 10°C. The water vapour permeability (30 $\mu$m, ASTM E96B, 10°C, 85%RH) is 64 g/m$^2$.day. This polyetherester is commercially sold by DSM Engineering Plastics, the Netherlands, as Arnitel® VT3104.

**Polyetherester C**

Polyetherester C contains 30 wt% polyether: polyethyleneoxide endcapped polypropyleneoxide and 70 wt% polyester: PBT. Oxygen permeability of a 30 $\mu$m- film of polyetherester C is 1500 cc/m$^2$.day.atm at 10°C and $CO_2$-permeability is 30.400 cc/m$^2$.day.bar at 10°C. The water vapour permeability (30 $\mu$m, ASTM E96B, 10°C, 85%RH) is 35 g/m$^2$.day. This polyetherester is commercially sold by DSM Engineering Plastics, the Netherlands, as Arnitel® PM581.

**Preparation of the window bags**

For reasons of experimental simplicity, rectangular shaped windows were cut out of the base film. Then a rectangular patch of the packaging material with 2 cm more width and 2 cm more length than the window cut out of the base film was positioned middle over the window. The patch out of the packaging material was heat-sealed to the base film with a dedicated heat sealing machine. The seal had a width of 5 mm. In this manner Arnitel® VT3104 patches were heat-sealed onto polyethylene terephthalate (PET) films.

**Produce tested**

The produce tested:

- fresh cut iceberg lettuce *(Lactuca sativa L)* originating from open field agriculture in the Netherlands. The harvested crops were washed, cut and dried with the commonly used dedicated industrial production machines (as produced for Dutch supermarkets). Freshly cut iceberg lettuce is usually stored under reduced oxygen pressure (<10%) by

$N_2$ flushing,

- fresh courgette slices (Cucurbita Pepo) originating from open field agriculture in the Netherlands. Whole courgettes were washed with 1.5% hydrogen peroxide solution to decontaminate the surface, rinsed with tap-water and cut in slices,

- fresh cucumber slices (Cucumis Sativus) originating from greenhouse agriculture in the Netherlands. Whole cucumbers were washed with a 1.5% hydrogen peroxide solution and cut into thick slices of 5 mm,

- white grapes (Vitaceae) on stems were used as received.

**Storage test**

The suitability of the packaging material was determined based on the quality of the produce after several days of storing in bags made out of the packaging material at 7°C and 85% RH (relative humidity). The quality of the product within the bag was evaluated every 1-3 days using different test parameters. The various parameters were determined as described below.

**Parameters**

*Overall appearance*

The overall appearance of the produce was judged through the bag and evaluated +1, 0, -1. These numerical indications stand for. +1= "yes I would buy this", 0= "I hesitate to buy this" and -1= "no I won't buy this". The quality is stated to be within the expiry-date (or sell-by-date, shelf-life) for +1 and 0 rating.

*Internal atmosphere*

The headspace of the packages was analysed with a commercially available Dansensor Checkmate II, for oxygen- and carbon dioxide- concentrations. The packages were punctured with the sample syringe through a rubber leak proof septum and the analysis was performed (output: oxygen and carbon dioxide level in %; air contains 21% $O_2$ and 0.03% $CO_2$).

*Presence of free water*

The presence or absence of free water in the package was noted: no free water present = 0, free water present = 1.

*Weight loss*

The weight loss was determined by subtracting the weight of package during the test from the initial weight. This weight loss equals to the loss of water vapour from the packages.

**Additional test parameters for iceberg lettuce**

The quality of the iceberg lettuce was determined based both on the quality parameters when the iceberg lettuce was still within the container and when the iceberg lettuce was removed from the container. The quality when the iceberg lettuce was still within the container was determined based on the following parameters: internal atmosphere, presence of free water, weight loss, overall appearance and physiological collapse. The quality when the iceberg lettuce was removed from the container was determined based on the following parameters: smell and discolored leaf pieces.

*Physiological collapse*

The physiological collapse is the reduction of product volume and was calculated as percentage. The physiological collapse was determined by picking up bags with cut iceberg lettuce on two corners of the smaller side and shake the bagged lettuce gently and put down again. With a ruler the "free headspace length" and the "total bag length" were determined on the longer side of the rectangular bag and from this the physiological collapse was calculated as (headspace length [cm]/ total bag length [cm] in %).

*Smell*

The bags were opened and the smell at opening was qualified. Fresh iceberg lettuce has a mild creamy - sweet odour, which was judged on a scale of 0-5, with 5 for the smell of fresh iceberg lettuce and 0 for no fresh odour. During storage, acid and fermentation off-odours can emerge; these were also judged on a scale from 0-5 with 0 means absent and 5 means very strong. A typical fermentation off-odour for cut iceberg lettuce is described as glue solvent odour.

*Discoloration/ browning*

The bag was emptied on a large blue table with constant fluorescent lightening *(TL)*. The lettuce was spread out evenly and a photo was made with a digital camera (for archiving and reporting). Then the discoloured pieces were counted. Fresh iceberg lettuce has only a few (0-5) brown or dark green pieces, but with the storage time this increases to levels of 20 pieces or more. In case the bag is leaking somewhere, all pieces are red-brown. In case the lettuce was spoilt a count of more than 60 pieces was recorded.

**Comparative Example A**

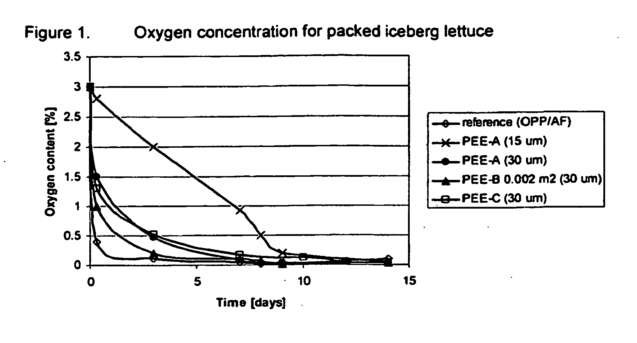

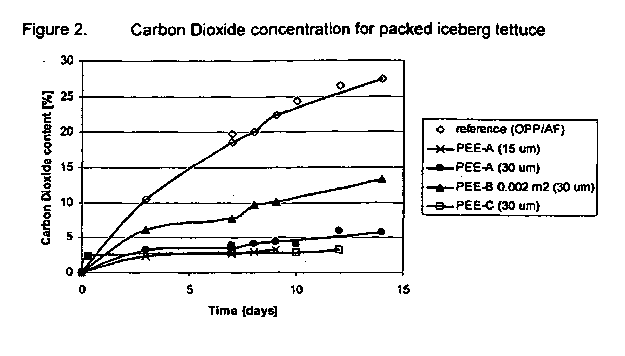

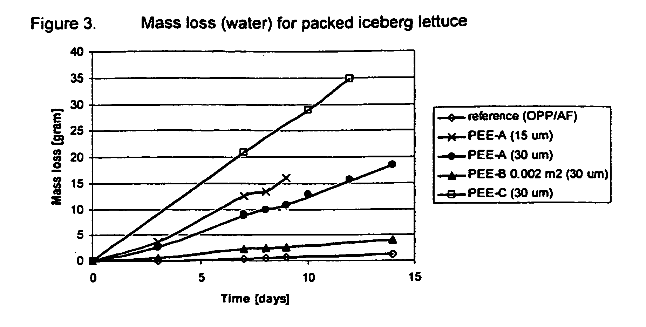

Cut iceberg lettuce (300 gram) was packed in OPP/antifog bags at reduced oxygen levels (around 3%) and stored at 7°C and 85% RH. This was the commercial package that is sold in the Dutch supermarkets with a guaranteed sufficient quality (overall appearance at least 0) for 7 days. The area of the bag was 0.12 m$^2$ (bags of 20x30 cm) and the film thickness is 30 $\mu$m. Oxygen and carbon dioxide concentration development is shown in Figure 1 and 2. The oxygen concentration drops below 0.5% within 1 day. The carbon dioxide concentration increased steadily to 15% in the first 5 days. Elevated carbon dioxide concentrations above 15% are detrimental for iceberg lettuce, accelerating physiological collapse, moisture formation, leaf transparency, leaf discoloration and the formation of a glue-like off-odour. Water loss was only 0.08 gram/day (Figure 3) and free water accumulated inside the bag from day 2 on. The overall appearance (and thus its shelf-life) of the iceberg quality remained above 0 for 7 days, which is in agreement with the supplier data.

**Example 1**

Portions of 300 gram cut iceberg lettuce were repacked (taken out of the commercial OPP/antifog bag as described in Comparative Example A, within 8 hrs after packing) in 30 $\mu$m thick Polyetherester A packages of 0.12 m$^2$ and stored at 7°C and 85% RH. The oxygen concentration drops to around 0.5% within three days and then further to near zero (< 0.1%), see Figure 1. Carbon dioxide level steadily increases up to 5% after 10 days (Figure 2). Water loss is 1.3 gram/day (Figure 3) leading to dry lettuce, with no visible form of free water (droplets, fog, etc.) present. Nevertheless, the cut lettuce still remains moist and crisp when eaten. The shelf life is limited by the slow but gradual increase in discoloured leaf pieces and physiological collapse. The quality is kept at an acceptable level longer, due to the high CO$_2$ flux out (keeps the CO$_2$ level within the package at a lower level) and the water flux out (drier lettuce) compared to the reference package of Comparative Example A. The iceberg quality stayed good for 10 days.

**Example 2**

Portions of 300 gram cut iceberg lettuce were repacked in PET (30 $\mu$m) bags of 0.12 m$^2$ with a Polyetherester B (30 $\mu$m) window of 0.002 m$^2$. The packages were stored at 7°C and 85% RH. The oxygen concentration drops to around 0.2% after three days and then further to near zero (< 0.1 %) (see Figure 1). Carbon dioxide level rises steadily to about 13% after 14 days. Water loss is 0.4 gram/day leading to crispy and dry lettuce. The iceberg quality is still excellent at day 7 and remains good for 13 days. The shelf life is limited by the slower but gradual rise of the amount of discoloured leaves and physiological collapse. The quality is kept at an acceptable level longer due to the low O$_2$ flux in (which decreases the actual respiration rate of the lettuce), the high CO$_2$ flux out (keeps CO$_2$ level below 15%) and water flux out (dry and crisp lettuce) compared to the reference package of Comparative Example A.

Table I

|  | Comp. Ex. A | Ex. 1 | Ex. 2 | Comp. Ex. B | Comp. Ex. C |
|---|---|---|---|---|---|
| Material bag | OPP | PEE-A | PET | PEE-A | PEE-C |
| Size bag [m$^2$] | 0,12 | 0,12 | 0,12 | 0,12 | 0.12 |
| Material patch | - | - | PEE-B | - | - |

(continued)

| | Comp. Ex. A | Ex. 1 | Ex. 2 | Comp. Ex. B | Comp. Ex. C |
|---|---|---|---|---|---|
| Size patch [m$^2$] | - | - | 0,002 | - | - |
| Film thickness [$\mu$m] bag | 30 | 30 | 30 | 15 | 30 |
| Film thickness [$\mu$m] patch | - | - | 30 | - | - |
| | | | | | |
| Calc. $O_2$ flux at 7°C [ml/bag.day.atm] *) | 33 | 165 | 21 | 285 | 151 |
| Calc. $CO_2$ flux at 7°C [ml/bag.day.atm] *) | 153 | 2565 | 492 | 4449 | 3359 |
| $CO_2/O_2$ [-] | 5 | 16 | 23 | 16 | 22 |
| | | | | | |
| $O_2$ flux [ml/bag.day] at 7°C (using driving force delta $O_2$ = 20%) | 7 | 33 | 4 | 57 | 30 |
| Driving force $CO_2$ (using $CO_2$ conc. @ day 10 [%]) | 25 | 5 | 11 | 3 | 3 |
| $CO_2$ flux [ml/bag.day] at 7°C (usinq $CO_2$ conc. @ day 10) | 38 | 128 | 54 | 133 | 101 |
| $O_2$ flux / V respiration o) | 0.14 | 0.46 | 0.06 | 0.79 | 0.42 |
| | | | | | |
| MVTR [g/m$^2$.dag] +) | 0 | 22 | 64 | 29 | 35 |
| Measured water flux [g/bag.day] | 0.08 | 1.3 | 0.4 | 1.8 | 2.8 |
| | | | | | |
| Shelf life at 7°C [days] | 7 | 10 | 13 | 5 | 5 |

*) Gas permeation ($O_2$, $CO_2$) measured at 7°C, 0% RH
o) ratio between $O_2$ flux and respiration rate using rate of respiration ($O_2$ consumption) at 7°C in air 72 ml/300 gram.day (10 ml/kg.hr); the actual respiration rate during the test will be lower than this rate, because the respiration rate decreases when oxygen concentration decreases; however as this effect is not linear and the relationship with $O_2$ concentration is not fully known, it is not taken into account for the calculations in this table)
+) MVTR according to ASTM E96B at 10°C, 85%RH

**Comparative Example B**

Portions of 300 gram cut iceberg lettuce were repacked in 15 $\mu$m thick Polyetherester A packages of 0.12 m$^2$ and stored at 7°C and 85% RH. The oxygen concentration decreases gradually to near zero within 9 days (Figure 1). Carbon dioxide level gradually increases up to 3% after 10 days (Figure 2). Water loss is 1.8 gram/day leading to dry lettuce. The iceberg remains good for only 5 days, due to discoloration (browning) already starting after day 2 (due to the relatively 'high' oxygen level between 1 and 3% during day 1-7). This example shows that too high oxygen permeability is not good for storage of iceberg lettuce as respiration rate is hardly reduced and the lettuce ages faster. It was concluded that an $O_2$ concentration below 0.5% is preferably reached after around 3 days maximum.

**Comparative Example C**

Portions of 300 gram cut iceberg lettuce were repacked in 30 $\mu$m thick Polyetherester C packages of 0.12 m$^2$ and stored at 7°C and 85% RH. The oxygen concentration drops to around 0.5% within three days and then further to near zero (< 0.1%), see Figure 1. Carbon dioxide level steadily increases up to 5% after 10 days (Figure 2). Water loss is 2.8 gram/day (Figure 3) leading to very dry lettuce. The iceberg quality remains good for 5 days, due to drying out of the product (leading to discoloration).

**Example 4**

Bags contained 200 grams of courgette slices each. Bags were 10 x 20 cm large and made of four different materials: reference material BOPP/AF (30 $\mu$m), Polyetherester-A (30 $\mu$m), Polyetherester-B (30 $\mu$m) and Polyetherester-C (30 $\mu$m). The bags were flushed with nitrogen gas to obtain initial oxygen concentration below 3%.

Courgette slices in PP reference material had a shelf life of 7 days (overall appearance below 0 after 7 days). The product inside the bag was very wet (weight loss 0.04 gram/day) and extensive microbial growth was visible at the evaluation at day 14. The oxygen concentration was close to 0 and the $CO_2$ concentration was around 30% at day 14.

Courgette in Polyetherester B showed extensive dehydration of cut courgette slices (weight loss 4.5 g/day), with around 30% weight loss in 2 weeks time. Carbon dioxide concentration was around 3% after 2 weeks and oxygen concentration close to 0%. The shelf life is around 5 days as the courgette becomes too dry to be sellable. No microbial growth occurs.

Courgette slices in Polyetherester A and C keeps a good appearance for about 10 days in comparison to 7 days in the reference BOPP package. The courgette slices remain dry, but not too dry (weight loss around 10% after 14 days for Polyetherester C (1.5 g/day) and around 4% for Polyetherester A (0.9 g/day). The $O_2$ concentration is near 0% and the $CO_2$ concentration is between 11 and 12% after 14 days. There is no microbial growth.

Example 5

Portions of about 450 gram of white grapes (on stems) were packed either in an open PE bag (reference from supermarket) or sealed bags of Polyetherester A or B under normal air.

After 14 days the grapes in the Polyetherester B bag looked most green (only 1 rotten piece) and the stems were least discoloured. The moisture loss was 30 g, which was only a little bit less than the open PE reference (35 g) and more than Polyetherester A (10 g). The gas composition was clearly modified: 6% oxygen and 1% carbon dioxide (PE reference: air; PEE-A: 1% $O_2$, 15% $CO_2$). The shelf-life of the reference was 12 days, the grapes in Polyetherester B bag 14 days and the grapes in Polyetherester A bag 10 days (>2 rotten pieces after 10 days).

**Example 6**

Cucumbers slices of 5 mm were packed into bags of 20 x 10 cm per 200 grams portion in reference PP bag, Polyetherester A, B and C under normal air. Polyetherester A and C could keep the cucumber slices better fresh than the normal PP reference bag (shelf-life of 6 days, 02 concentration 0%, CO2 21 %; moisture loss 0 g/day). Polyetherester A was best and shelf lives of 8-9 days can be attained ($O_2$ after 6 days = 0.1%, $CO_2$ = 4%; moisture loss 0.9 g/d). With Polyetherester B the overall appearance dropped below 0 after 4 days, due to too much drying ($O_2$ after 6 days = 0.3%, $CO_2$ = 2%; moisture loss 6 g/d). Polyetherester C lead to shelf-life of 7 days ($O_2$ after 6 days = 0.1%, $CO_2$ = 3%; moisture loss 1.5 g/d).

**Claims**

1. Container for respiring produce made from a packaging material consisting of a polyether-ester block copolymer or a blend of polyether-ester block copolymers and which packaging material has all of the following properties:

   a) permeability for oxygen is at least 40 cc.mm/m$^2$.day.atm at 10 °C,
   b) permeability for carbon dioxide is at least 600 cc.mm/m$^2$.day.atm at 10 °C,
   c) perm selectivity of carbon dioxide to oxygen is at least 10, wherein the perm selectivity is defined as the ratio of the permeability for carbon dioxide to the permeability of oxygen,
   d) water vapour transmission is at least 0.5 g.mm/ m$^2$.day at 10 °C and 85% RH and
   e) wherein the dimensions of the packaging material are chosen so as to allow oxygen to enter into the container at a rate lower than 110% of the oxygen respiration rate of the produce.

2. Container for respiring produce according to claim 1, wherein the

   a) permeability for oxygen is at least 100 cc.mm/m$^2$.day.atm at 10 °C,
   b) permeability for carbon dioxide is at least 750 cc.mm/m$^2$.day.atm at 10 °C,
   c) perm selectivity of carbon dioxide to oxygen is at least 12, wherein the perm selectivity is defined as the ratio of the permeability for carbon dioxide to the permeability of oxygen,
   d) water vapour transmission is at least 1 g.mm/ m$^2$.day at 10 °C and 85% RH and

e) wherein the dimensions of the packaging material are chosen so as to allow oxygen to enter into the container at a rate lower than or equal to 90% of the oxygen respiration rate of the produce.

3. Container according to claim 1 or 2 **characterized in that** the container is fully made out of the packaging material.

4. Container according to claim 1 or 2 **characterized in that** the container is only partly made out of the packaging material.

5. Container according to claim 4 **characterized in that** the part made out of the packaging material is in the form of a panel that covers an excision in the material the container is made from.

6. Container according to anyone of claim 1-5 for holding cut lettuce, cut iceberg lettuce, cut romain lettuce, cut spinach and/or cut endive wherein the rate at which oxygen enters the container is below 250 ml/kg.day.

7. Container according to claim 6 wherein the oxygen concentration at steady state conditions is less than 2 vol% $O_2$.

8. Container according to anyone of claim 1-7 wherein the packaging material is used as a monolithic material.


**Patentansprüche**

1. Behälter für atmendes Produkt, hergestellt aus einem Verpackungsmaterial, das aus einem Polyether-Ester-Blockcopolymer oder einem Gemisch von Polyether-Ester-Blockcopolymeren besteht und welches Verpackungsmaterial alle der folgenden Eigenschaften aufweist:

a) die Durchlässigkeit für Sauerstoff beträgt wenigstens 40 cc.mm/m$^2$.Tag.atm bei 10 °C,
b) die Durchlässigkeit für Kohlendioxid beträgt wenigstens 600 cc.mm/m$^2$.Tag.atm bei 10 °C,
c) die Durchlässigkeitsselektivität für Kohlendioxid zu Sauerstoff beträgt wenigstens 10, wobei die Durchlässigkeitsselektivität definiert ist als das Verhältnis der Durchlässigkeit für Kohlendioxid zu der Durchlässigkeit für Sauerstoff,
d) die Wasserdampf-Transmission beträgt wenigstens 0,5 g.mm/m$^2$.Tag bei 10 °C und 85 % RH und
e) wobei die Abmessungen des Verpackungsmaterials so gewählt sind, dass Sauerstoff mit einer Rate von weniger als 110 % der Sauerstoff-Atmungsrate des Produkts in den Behälter eintreten kann.

2. Behälter für atmendes Produkt gemäß Anspruch 1, wobei

a) die Durchlässigkeit für Sauerstoff wenigstens 100 cc.mm/m$^2$.Tag.atm bei 10 °C beträgt,
b) die Durchlässigkeit für Kohlendioxid wenigstens 750 cc.mm/m$^2$.Tag.atm bei 10 °C beträgt,
c) die Durchlässigkeitsselektivität für Kohlendioxid zu Sauerstoff wenigstens 12 beträgt, wobei die Durchlässigkeitsselektivität definiert ist als das Verhältnis der Durchlässigkeit für Kohlendioxid zu der Durchlässigkeit für Sauerstoff,
d) die Wasserdampf-Transmission wenigstens 1 g.mm/m$^2$.Tag bei 10 °C und 85 % RH beträgt und
e) wobei die Abmessungen des Verpackungsmaterials so gewählt sind, dass Sauerstoff mit einer Rate von weniger als oder gleich 90 % der Sauerstoff-Atmungsrate des Produkts in den Behälter eintreten kann.

3. Behälter gemäß Anspruch 1 oder 2, **dadurch gekennzeichnet, dass** der Behälter vollständig aus dem Verpackungsmaterial hergestellt ist.

4. Behälter gemäß Anspruch 1 oder 2, **dadurch gekennzeichnet, dass** der Behälter nur teilweise aus dem Verpackungsmaterial hergestellt ist.

5. Behälter gemäß Anspruch 4, **dadurch gekennzeichnet, dass** der aus dem Verpackungsmaterial hergestellte Teil in der Form eines Elements vorliegt, das eine Exzision in dem Material, aus dem der Behälter hergestellt ist, bedeckt.

6. Behälter gemäß einem der Ansprüche 1-5 zum Beinhalten von geschnittenem Salat, geschnittenem Eisbergsalat, geschnittenem Romanasalat, geschnittenem Spinat und/oder geschnittenem Endiviensalat, wobei die Rate, mit der Sauerstoff in den Behälter eintritt, unter 250 ml/kg.Tag beträgt.

**7.** Behälter gemäß Anspruch 6, wobei die Sauerstoffkonzentration unter stationären Bedingungen weniger als 2 Vol.-% $O_2$ beträgt.

**8.** Behälter gemäß einem der Ansprüche 1-7, wobei das Verpackungsmaterial als monolithisches Material verwendet wird.

**Revendications**

**1.** Récipient pour marchandise respirante fabriqué à partir d'un matériau d'emballage constitué d'un copolymère séquencé de polyéther-ester ou d'un mélange de copolymères séquencés de polyéther-ester, lequel matériau d'emballage possède toutes les propriétés suivantes :

a) la perméabilité à l'oxygène est d'au moins 40 $cm^3$.mm/$m^2$.jour.atm à 10 °C,
b) la perméabilité au dioxyde de carbone est d'au moins 600 $cm^3$.mm/$m^2$.jour.atm à 10 °C,
c) la permsélectivité du dioxyde de carbone à l'oxygène est d'au moins 10, la permsélectivité étant définie comme le rapport entre la perméabilité au dioxyde de carbone et la perméabilité à l'oxygène,
d) la transmission de la vapeur d'eau est d'au moins 0,5 g.mm/$m^2$.jour à 10 °C et 85 % HR, et
e) dans lequel les dimensions du matériau d'emballage sont choisies de manière à permettre à l'oxygène de pénétrer dans le récipient à une vitesse inférieure à 110 % de la vitesse de respiration d'oxygène de la marchandise.

**2.** Récipient pour marchandise respirante selon la revendication 1, dans lequel :

a) la perméabilité à l'oxygène est d'au moins 100 $cm^3$.mm/$m^2$.jour.atm à 10 °C,
b) la perméabilité au dioxyde de carbone est d'au moins 750 $cm^3$.mm/$m^2$.jour.atm à 10 °C,
c) la permsélectivité du dioxyde de carbone à l'oxygène est d'au moins 12, la permsélectivité étant définie comme le rapport entre la perméabilité au dioxyde de carbone et la perméabilité à l'oxygène,
d) la transmission de la vapeur d'eau est d'au moins 1 g.mm/$m^2$.jour à 10 °C et 85 % HR, et
e) dans lequel les dimensions du matériau d'emballage sont choisies de manière à permettre à l'oxygène de pénétrer dans le récipient à une vitesse inférieure ou égale à 90 % de la vitesse de respiration d'oxygène de la marchandise.

**3.** Récipient selon la revendication 1 ou 2 **caractérisé en ce que** le récipient est constitué entièrement par le matériau d'emballage.

**4.** Récipient selon la revendication 1 ou 2 **caractérisé en ce que** le récipient n'est constitué que partiellement par le matériau d'emballage.

**5.** Récipient selon la revendication 4 **caractérisé en ce que** la partie constituée par le matériau d'emballage se présente sous la forme d'un panneau qui recouvre une excision dans le matériau à partir duquel le récipient est fabriqué.

**6.** Récipient selon l'une quelconque des revendications 1 à 5 pour contenir de la laitue à couper, de la laitue iceberg à couper, de la laitue romaine à couper, des épinards à couper et/ou de l'endive à couper dans lequel la vitesse à laquelle l'oxygène pénètre dans le récipient est inférieure à 250 ml/kg.jour.

**7.** Récipient selon la revendication 6 dans lequel la concentration d'oxygène dans des conditions d'équilibre est inférieure à 2 % en volume de $O_2$.

**8.** Récipient selon l'une quelconque des revendications 1 à 7 dans lequel le matériau d'emballage est utilisé comme un matériau monolithique.

**Figure 1.** Oxygen concentration for packed iceberg lettuce

Figure 2.    Carbon Dioxide concentration for packed iceberg lettuce

Figure 3. Mass loss (water) for packed iceberg lettuce

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1245617 A
- EP 0737709 A
- WO 9304949 A
- US 5045331 A
- EP 0270764 A
- US 5840807 A
- WO 03031858 A
- WO 2006131236 A
- US 5165947 A